# EUROPÄISCHE PATENTSCHRIFT

(11) **EP 3 359 282 B1**
(45) Veröffentlichungstag und Bekanntmachung des Hinweises auf die Patenterteilung: **08.01.2020**
(21) Anmeldenummer: 16777626.9
(22) Anmeldetag: 27.09.2016
(51) Int. Cl.: B01D 53/26, B60T 17/00

(54) **TROCKENMITTELPATRONE MIT VERBESSERTER TROCKNUNG UND REGENERATION**
DRYING CARTRIDGE FOR IMPROVED DRYING AND REGENERATION
CARTOUCHE DE SÉCHAGE POUR SÉCHAGE ET RÉGÉNÉRATION AMÉLIORÉS

(30) Priorität: 09.10.2015 DE 102015117283
(43) Veröffentlichungstag der Anmeldung: 15.08.2018
(73) Patentinhaber: KNORR-BREMSE Systeme für Nutzfahrzeuge GmbH, 80809 München (DE)
(72) Erfinder: SCHÄBEL, Stefan, 84036 Landshut (DE); OCHSENKÜHN, Andreas, 80339 München (DE); HUBER, Christian, 81825 München (DE)
(86) Internationale Anmeldenummer: PCT/EP2016/072965
(87) Internationale Veröffentlichungsnummer: WO 2017/060127

(56) Entgegenhaltungen:
- EP-A1- 1 048 541
- EP-A2- 1 920 983
- WO-A1-2009/043427
- US-A1- 2007 028 777
- US-A1- 2012 297 985

## Beschreibung

Die vorliegende Erfindung bezieht sich auf eine Trockenmittelpatrone zum Trocknen von Luft und ein Verfahren zur Herstellung derselben und insbesondere auf eine Trockenmittelpatrone mit umgekehrter Strömungsrichtung.

### Hintergrund

Trockenmittelpatronen kommen häufig in Druckluftsystemen zum Einsatz, um der Druckluft Feuchtigkeit zu entziehen und so eine einwandfreie Funktionsweise des Druckluftsystems auch bei tiefen Temperaturen zu gewährleisten. Typischerweise sind bei Trockenmittelpatronen der Lufteinlass und der Luftauslass auf einer Seite angeordnet, wobei die Druckluft bei konventionellen Trockenmittelpatronen nach dem Passieren des Einlasses zunächst seitlich an einem Trockenmittelbehälter vorbeigeführt wird, um daran anschließend das Trockenmittel in vertikaler Richtung entgegengesetzt zur Einströmrichtung zu durchströmen. Dabei wird der Luft die Feuchtigkeit entzogen und die getrocknete Luft gelangt über den Auslass beispielsweise zu einem Luftreservoir, wo die Druckluft gespeichert wird. In EP 1 920 983 A2 ist ein konventioneller Lufttrockner offenbart, wobei die Luftzuführung über einen zentralen Bereich und die Luftabführung über einen peripheren Bereich erfolgt. WO2009043427 A1 und US2007028777 A1 offenbaren verschiedene Trockenmittelpatrone.

Während einer Regeneration der Trockenmittelpatrone oder beim Ablassen der Druckluft (z.B. wenn das Luftreservoir gefüllt ist und ein entsprechendes Ventil betätigt wird) durchströmt die Luft in umgekehrten Strömungsrichtung die Trockenmittelpatrone. Bei den konventionellen Trockenmittelpatronen führt dies dazu, dass Öl, Kohlepartikel und andere Verschmutzungen, die bei der Regeneration aus der Trockenmittelpatrone entfernt werden sollen, den gesamten Weg durch die Trockenmittelpatrone zurück nehmen müssen. Dies birgt die Gefahr in sich, dass sich die Verschmutzungen an verschiedenen Stellen in der Trockenmittelpatrone absetzen können. Ein weiterer Nachteil der konventionellen Trockenmittelpatronen besteht darin, dass die Auslassöffnung des Trockenmittelbehälters in einer Querschnittsansicht senkrecht zur Hauptströmungsrichtung in der Regel mittig angeordnet ist, sodass nur eine unzureichende Durchströmung des Trockenmittels in dem Trockenmittelbehälter erreichbar ist und die Effizienz bei der Trocknung nicht optimal ist.

Der vorliegenden Erfindung liegt die Aufgabe zugrunde, eine Trockenmittelpatrone zu schaffen, die eine verbesserte Regeneration und Trocknung erreicht.

### Zusammenfassung

Die oben genannte Aufgabe wird durch eine Trockenmittelpatrone nach Anspruch 1, einen Trockenmittelbehälter nach Anspruch 13 und ein Verfahren zur Herstellung einer Trockenmittelpatrone nach Anspruch 15 gelöst.

Die vorliegende Erfindung bezieht sich auf eine Trockenmittelpatrone zum Trocknen von Luft entlang eines Strömungsweges. Die Trockenmittelpatrone umfasst: ein Gehäuse und einen Trockenmittelbehälter. Das Gehäuse umfasst einen Einlass und einen Auslass, die durch den Strömungsweg (fluid) verbunden sind. Der Trockenmittelbehälter umfasst einen Innenraum für Trockenmittel, zumindest eine Einströmöffnung und zumindest eine Ausströmöffnung, die durch den Strömungsweg miteinander verbunden sind. Der Trockenmittelbehälter befindet sich in dem Gehäuse, wobei der Trockenmittelbehälter und das Gehäuse derart ausgebildet sind, dass die Luft während des Trocknens der Luft entlang des Strömungsweges von dem Einlass zu der zumindest einen Einströmöffnung strömt und nach einem Verlassen des Trockenmittelbehälters und einer anschließenden Strömungsumkehr entlang eines Seitenkanals zwischen dem Trockenmittelbehälter und dem Gehäuse zu dem Auslass strömt. In einer Querschnittsfläche senkrecht zum Strömungsweg in dem Innenraum ist der Auslass in einem zentralen Bereich angeordnet und der Einlass ist in einem peripheren Bereich, der den zentralen Bereich umgibt, angeordnet.

Die obengenannte Aufgabe wird durch den Erfindungsgegenstand dadurch gelöst, dass der Einlass in dem Gehäuse und die zumindest eine Einströmöffnung des Trockenmittelbehälters auf der gleichen Seite des Gehäuses liegen, sodass die zu trocknende Luft nach dem Einlass sofort in den Trockenmittelbehälter gelangt. Dies bedeutet ebenfalls, dass bei einer Regeneration Verschmutzungen (z. B. Öl oder Kohlepartikel) in der Trockenmittelpatrone über einen kürzeren Weg zum Ablassventil entsorgt werden können.

Im Rahmen der vorliegenden Erfindung werden als Einströmöffnung(en) oder als Ausströmöffnung(en) alle Öffnungen bezeichnet, wo ein Luftweg durchführen kann, sodass ebenfalls ein siebförmiges Element oder auch ein Vlies oder anderes Material, durch welches Luft strömen kann und welches in der Nähe des Einlasses angeordnet ist, eine Vielzahl von Einströmöffnungen aufweist. Die Richtungsumkehr kann sich auf alle Bewegungskomponenten (z.B. die drei Geschwindigkeitskomponenten) eines Luftstromes beziehen, sodass das Fehlen einer Bewegungsumkehr insbesondere den Fall umfasst, dass keine der drei Bewegungskomponenten umgekehrt wird. Anders ausgedrückt, umfasst die Definition eines Luftstromes ohne Bewegungsumkehr den Fall, dass alle Bewegungskomponenten monoton verlaufen (d.h. stets anwachsen oder stets fallen). Schließlich definiert der Strömungsweg zumindest einen Weg aus der Vielzahl von Strömungswegen, die die Luft (oder ein Luftmolekül) beim Durchströmen durch die Trockenmittelpatrone nehmen kann.

In weiteren Ausführungsbeispielen kann der Trockenmittelbehälter eine Zylinderform mit einer Seitenwand, die den Innenraum umgibt und sich zwischen zwei Stirnflächen erstreckt, aufweisen. Die zumindest eine Einströmöffnung und die zumindest eine Ausströmöffnung können axial gegenüberliegend an den Stirnflächen ausgebildet sein. Zwischen der Seitenwand und dem Gehäuse kann ein Seitenkanal gebildet sein, sodass der Strömungsweg sich von dem Einlass, durch die zumindest eine Einströmöffnung, den Innenraum, die zumindest eine Ausströmöffnung, den Seitenkanal und den Auslass des Gehäuses erstreckt.

In weiteren Ausführungsbeispielen kann die Trockenmittelpatrone ausgebildet sein, um an einem Fahrzeug derart befestigt zu werden, dass der Strömungsweg von der zumindest einen Einströmöffnung zu der zumindest einen Ausströmöffnung entgegen der Schwerkraft erfolgt.

Zum Befestigen der Trockenmittelpatronen an einem Fahrzeug können beispielsweise Fixierungsmittel genutzt werden. Beispielsweise kann die Trockenmittelpatrone in einer vertikal aufrechten Position am Fahrzeug befestigt werden, sodass der Einlass und die zumindest eine Einströmöffnung vertikal unterhalb des Innenraumes angeordnet sind (in Richtung der Schwerkraft). Ebenfalls möglich ist, dass bestimmte Teile der Trockenmittelpatrone wie beispielsweise das Gehäuse ausreichend stabil ausgebildet sind, sodass, beispielsweise über eine Schelle oder ähnliche Fixierungsmittel, die Trockenmittelpatrone entsprechend an dem Fahrzeug fixiert werden kann.

In weiteren Ausführungsbeispielen kann der Trockenmittelbehälter eine Luftverteilungsstruktur an der zumindest einen Einströmöffnung aufweisen, wobei die Luftverteilungsstruktur ausgebildet ist, um die Luft, bevor sie in den Innenraum gelangt, lateral über eine Breitenausdehnung des Trockenmittelbehälters zu verteilen.

Die laterale Verteilung bezieht sich beispielsweise auf eine Radialrichtung und kann in einer Querschnittsebene senkrecht zu dem Strömungsweg innerhalb des Trockenmittelbehälters definiert werden (d.h. die Radialausdehnung bezieht sich auf eine Ausdehnung in dieser Querschnittsebene).

Über die Luftverteilungsstruktur wird erreicht, dass die Trockenmittelpatrone möglichst gleichmäßig mit Luft durchströmt wird und dass, wenn die einströmende Luft von einem Einlass zunächst in die Trockenmittelpatrone einströmt, sich möglichst über die gesamte radiale Ausdehnung der Trockenmittelpatronen verteilt wird bzw. die gesamte radiale Breite als Einströmöffnung dienen kann.

In weiteren Ausführungsbeispielen kann die Luftverteilungsstruktur aus einem System von Vorsprüngen bestehen, die einen Zwischenraum definieren, der ausgebildet ist, um die Luft von der zumindest eine Einströmöffnung über eine Breite des Trockenmittelbehälters senkrecht zu dem Strömungsweg in dem Innenraum zu verteilen.

Bei weiteren Ausführungsbeispielen kann entlang des Strömungsweges stromabwärts von der zumindest einen Ausströmöffnung ein Hohlraum in dem Gehäuse gebildet sein. Der Hohlraum kann die zumindest eine Ausströmöffnung mit dem Seitenkanal verbinden. Außerdem kann der Hohlraum ein vorbestimmtes Mindestvolumen aufweisen, um eine Regeneration bei umgekehrter Strömungsrichtung zu erleichtern. Das Mindestvolumen ist beispielsweise größer als 5% oder 10% oder größer als 30% des Volumens des Trockenmittels in der Trockenmittelpatrone. Dieser Hohlraum mit dem Mindestvolumen bietet den Vorteil, dass bei einer Regeneration oder eines Ablassens, die getrocknete Luft in dem Hohlraum sofort zur Regeneration des Trockenmittels zur Verfügung steht, sodass die Effizienz der Regeneration erhöht wird.

Im Rahmen der vorliegenden Erfindung bezieht sich der Begriff "stromabwärts" oder "stromaufwärts" auf den Luftstrom während des Trocknens (d.h. während der Nutzung oder des Betriebes der Trockenmittelpatrone) und bezeichnet Positionen, die der Luftstrom nachfolgend passiert (stromabwärts) oder die der Luftstrom bereits passiert hat (stromaufwärts).

In weiteren Ausführungsbeispielen kann der Trockenmittelbehälter an einer der Stirnflächen ein Abdeckelement aufweisen. Außerdem kann die zumindest eine Ausströmöffnung mehrere Ausströmöffnungen umfassen, die in dem Abdeckelement ausgebildet sind. Die mehreren Ausströmöffnungen sind in einer Querschnittsfläche senkrecht zum Strömungsweg in dem Innenraum verteilt, um eine gleichmäßige Durchströmung des Innenraums zu fördern.

Diese Verteilung der Ausströmöffnungen entlang der Querschnittsfläche senkrecht zum Strömungsweg ist vorteilhaft, da eine solche Verteilung ebenfalls eine gleichmäßige Strömungsverteilung innerhalb des Trockenmittelbehälters erleichtert, sodass das gesamte Trockenmittel gleichmäßig zum Trocknen der Luft genutzt werden kann.

In weiteren Ausführungsbeispielen kann eine Feder zwischen dem Abdeckelement und dem Gehäuse vorhanden sein, wobei die Feder ausgebildet ist, um einen Druck auf das Abdeckelement auszuüben, sodass ein in dem Innenraum befindliches Trockenmittel unter Vorspannung steht. Die Feder befindet sich beispielsweise in dem Hohlraum zwischen dem Gehäuse und dem Trockenmittelbehälter bzw. dem Abdeckelement des Trockenmittelbehälters.

In weiteren Ausführungsbeispielen kann die Trockenmittelpatrone zumindest ein Dichtelement und das Gehäuse kann einen Unterbau umfassen. Das zumindest eine Dichtelement dichtet einen Kontakt zwischen dem Trockenmittelbehälter und dem Gehäuse ab. Der Einlass und der Auslass können beispielsweise in dem Unterbau ausgebildet sein. Das Dichtelement soll breit ausgelegt werden. Es soll nicht nur ein beispielhafter O-Ring umfasst sein, sondern ebenso eine Dichtstruktur umfasst sein, die z.B. eine luftdichte Pressverbindung oder eine andere luftdichte Verbindung herstellt.

Ebenso kann die zumindest eine Einströmöffnung mehrere Einströmöffnungen umfassen. In der Querschnittsfläche senkrecht zum Strömungsweg in dem Innenraum können die mehreren Einströmöffnungen nur an vorbestimmten Winkelabschnitten gebildet sein und zwischen den vorbestimmten Winkelabschnitten kann zumindest ein radialer Verbindungskanal ausgebildet sein, der den Auslass des Gehäuses mit dem Seitenkanal verbindet.

In weiteren Ausführungsbeispielen kann die Trockenmittelpatrone ein Trockenmittel und eine Filtereinrichtung umfassen, wobei das Trockenmittel sich in dem Innenraum befindet. Die Filtereinrichtung kann zwischen dem Trockenmittel und der zumindest einen Einströmöffnung des Trockenmittelbehälters oder zwischen dem Trockenmittel und der zumindest einen Ausströmöffnung des Trockenmittelbehälters angeordnet sein. Die Filtereinrichtung ist ausgebildet, um beispielsweise Verschmutzungen aus der Luft zu filtern.

In weiteren Ausführungsbeispielen kann die Filtereinrichtung einen Koaleszenzfilter und/oder ein Teilchenfilter umfassen.

Somit können beispielsweise innerhalb des Trockenmittelbehälters mehrere Schichten von Filter ausgebildet sein, die beispielsweise Schmutzteilchen herausfiltern oder auch Ölverschmutzungen. Die Filter können beispielsweise Vlieseinlagen oder Partikelfilter umfassen und an der zumindest einen Ausströmöffnung und/oder der zumindest einen Einströmöffnung angeordnet sein.

Die Erfindung bezieht sich ebenfalls auf ein Verfahren zum Herstellen einer Trockenmittelpatrone zum Trocknen von Luft entlang eines Strömungsweges. Das Verfahren umfasst die folgenden Schritte: Bereitstellen eines Gehäuses mit einem Einlass und einem Auslass, die durch den Strömungsweg verbunden sind; Bereitstellen eines Trockenmittelbehälters mit einem Innenraum für Trockenmittel, zumindest einer Einströmöffnung und zumindest einer Ausströmöffnung, die durch den Strömungsweg verbunden sind; und Anordnen des Trockenmittelbehälters in dem Gehäuse, sodass das Gehäuse und der Trockenmittelbehälter den Strömungsweg für Luft derart bilden, dass die Luft während des Trocknens der Luft von dem Einlass zu der zumindest einen Einströmöffnung strömt und nach einem Verlassen des Trockenmittelbehälters und einer anschließenden Strömungsumkehr entlang eines Seitenkanals zwischen dem Trockenmittelbehälter und dem Gehäuse zu dem Auslass strömt. In einer Querschnittsfläche senkrecht zum Strömungsweg in dem Innenraum ist der Auslass in einem zentralen Bereich angeordnet und der Einlass ist in einem peripheren Bereich, der den zentralen Bereich umgibt, angeordnet.

### Kurzbeschreibung der Figuren

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die szifischen Ausführungsformen einschränkt, sondern lediglich der Erklärung und dem Verständnis dienen.
- Fig. 1: zeigt eine Trockenmittelpatrone nach einem Ausführungsbeispiel der vorliegenden Erfindung.
- Fig. 2: zeigt weitere optionale Komponenten der Trockenmittelpatrone nach weiteren Ausführungsbeispielen.
- Fig. 3: zeigt einen Trockenmittelbehälter gemäß einem Ausführungsbeispiel.
- Fig. 4: zeigt ein Flussdiagramm für ein Verfahren zur Herstellung einer Trockenmittelpatrone.

### Detaillierte Beschreibung

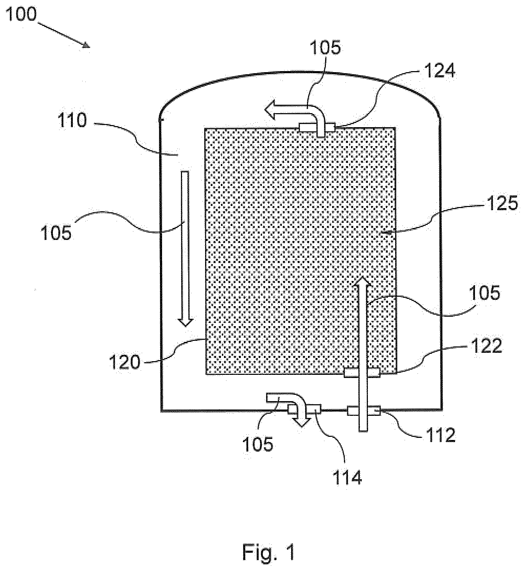

Fig. 1 zeigt eine Trockenmittelpatrone 100 zum Trocknen von Luft entlang eines Strömungsweges 105. Die Trockenmittelpatrone 100 umfasst ein Gehäuse 110 mit einem Einlass 112 und einem Auslass 114, die durch den Strömungsweg 105 verbunden sind. Die Trockenmittelpatrone umfasst weiter einen Trockenmittelbehälter 120 mit einem Innenraum 125, einer Einströmöffnung 122 und einer Ausströmöffnung 124, die entlang des Strömungsweges 105 liegen. Der Trockenmittelbehälter 120 ist derart in dem Gehäuse 110 angeordnet, dass der Einlass 112 des Gehäuses 110 und die Einströmöffnung 122 des Trockenmittelbehälters 120 an einer gleichen Seite des Gehäuses 110 liegen bzw. zu einer gleichen Seite des Gehäuses 110 hingewandt sind.

Somit wird gemäß einem Ausführungsbeispiel der vorliegenden Erfindung die Luft nach dem Passieren des Einlasses 112 sofort zu der Einströmöffnung 122 des Trockenmittelbehälters 120 geführt. Insbesondere ist für die einströmende Luft keine Bewegungsumkehr erforderlich, um zum Trockenmittel zu gelangen. Die Luft kann während des normalen Betriebes beispielsweise in einer monotonen Aufwärtsbewegung (entgegen der Schwerkraft) nach oben strömen. Im Gegensatz zu konventionellen Trockenmittelpatronen wird die Luft nicht erst nach oben geleitet, um anschließend von oben in den Trockenmittelbehälter zu gelangen. Vielmehr ist die Strömungsrichtung der Luft im Vergleich zu den konventionellen Trockenmittelpatronen umgekehrt.

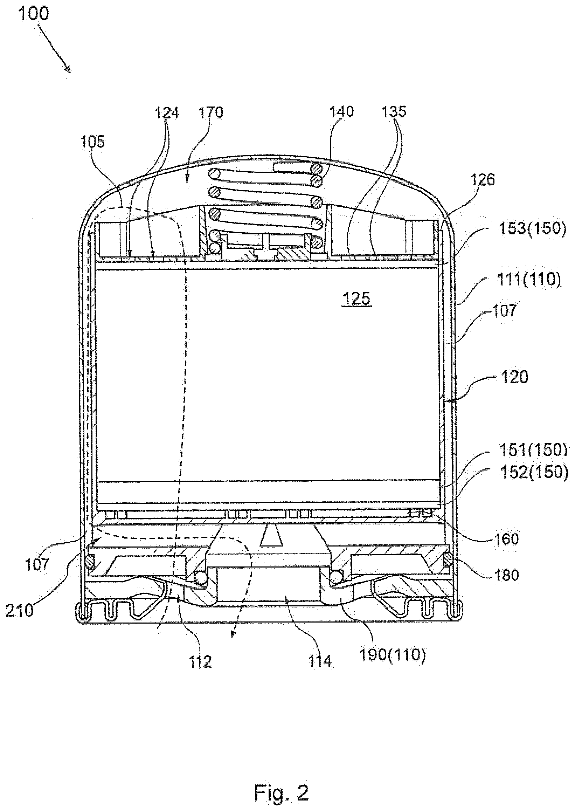

Fig. 2 zeigt weitere optionale Komponenten der Trockenmittelpatrone 100 gemäß weiterer Ausführungsbeispiele.

In der Trockenmittelpatrone 100, wie sie in der Fig. 2 zu sehen ist, weist das Gehäuse 110 einen Unterbau 190 auf, und der Trockenmittelbehälter 120 ist in dem Gehäuse 110 derart angeordnet, dass zwischen dem Trockenmittelbehälter 120 und dem Gehäuse 110 ein Seitenkanal 107 ausgebildet ist. Außerdem ist der Auslass 114 in einem zentralen Bereich bezüglich einer horizontalen Querschnittsebene ausgebildet. Der Einlass 112 kann eine oder mehrere Öffnungen umfassen, die beispielsweise in einer Umfangsrichtung um den Auslass 114 herum angeordnet sind.

Außerdem umfasst in diesem Ausführungsbeispiel der Trockenmittelbehälter 120 mehrere Einströmöffnungen 122 (nicht gezeigt), mehrere Ausströmöffnungen 124, eine optionale Filtereinrichtung 150, die einen Koaleszenzfilter 151, einen optionalen ersten Partikelfilter 152 und einen optionalen zweiten Partikelfilter 153 aufweist. Der erste Partikelfilter 152 und der Koaleszenzfilter 151 sind in dem Trockenmittelbehälter 120 auf der Seite der mehreren Einströmöffnung 122 ausgebildet und der zweite Partikelfilter 153 ist in dem Trockenmittelbehälter 120 auf der Seite der Ausströmöffnungen 124 angeordnet. Der zweite Partikelfilter 153 kann beispielsweise eine Vlieseinlage umfassen, um beispielsweise zu verhindern, dass das Trockenmittel die Ausströmöffnungen 124 zusetzt oder dadurch entweichen kann.

Der Koaleszenzfilter umfasst beispielsweise ein Volumen zwischen 50 und 150 cm³ oder von ungefähr 98 cm³ und weist eine Querschnittsfläche zwischen 50 und 200 cm² (oder von ca. 122 cm²) auf. Der erste und/oder zweite Partikelfilter 152, 153 kann ein Volumen zwischen 10 und 50 cm³ (oder von ca. 25 cm³) aufweisen. Das Trockenmittel kann ein Volumen zwischen 500 und 2000 cm³ (oder von ca. 920 cm³) aufweisen. Diese Werte sind lediglich als Beispiele zu verstehen und können in weiteren Ausführungsbeispiele abweichen.

Um eine möglichst gleichmäßige Durchströmung des Innenraumes 125 des Trockenmittelbehälters 120 zu erreichen, ist in diesem Ausführungsbeispiel nach oder vor den Einströmöffhungen 122 eine optionale Luftverteilungsstruktur 160 ausgebildet. Die Luftverteilungsstruktur 160 kann beispielsweise aus einer Vielzahl von Pins oder Vorsprüngen gebildet sein, die den ersten Partikelfilter 152 in dem Trockenmittelbehälter 120 von den Einströmöffnungen 122 beabstandet, sodass die Luft, die über den Einlass 112 in den Trockenmittelbehälter 120 gelangt, sich entlang einer horizontalen Ebene (einer Ebene senkrecht zu der Strömungsrichtung der Luft in dem Trockenmittelbehälter 120) verteilen kann und so eine gleichmäßige Durchströmung des Trockenmittelbehälters 120 ermöglicht.

Die Ausströmöffnungen 124 sind in dem Ausführungsbeispiel der Fig. 2 in einem Abdeckelement 135 ausgebildet, das als eine Abdeckplatte gebildet sein kann und eine obere Begrenzung (Stirnfläche) des Trockenmittelbehälters 120 darstellt. Zwischen dem Abdeckelement 135 und dem Gehäuse 110 ist eine Feder 140 angeordnet, die einen Druck auf das Abdeckelement 135 ausübt, sodass das Trockenmittel in dem Trockenmittelbehälter 120 unter einer Vorspannung steht. Dazu ist das Abdeckelement 135 axial beweglich in dem Trockenmittelbehälter angeordnet. Um die Feder 140 unterzubringen und um einen Luftspeicher bereitzustellen, ist zwischen dem Gehäuse 110 und dem Abdeckelement 135 ein Hohlraum 170 ausgebildet. Der Hohlraum 170 verbindet alle Ausströmöffnungen 124 und den Seitenkanal 107 miteinander und führt die getrocknete Luft.

Außerdem weist das Gehäuse 110 einen Unterbau 190 und ein Gehäuseoberteil oder Gehäusedeckel 111 auf. Der Gehäusedeckel 111 ist an dem Unterbau 190 befestigt und der Trockenmittelbehälter 120 wird zwischen dem Gehäusedeckel 111 und dem Unterbau 190 gehalten. Beispielsweise kann der Trockenmittelbehälter 120 durch die Federkraft der Feder 140 gegen den Unterbau 190 gedrückt werden, der seinerseits an dem Gehäusedeckel 111 befestigt ist. Optional können zwischen dem Trockenmittelbehälter 120 und dem Unterbau 190 Abdichtelemente 180 vorhanden sein, die ausgebildet sind, einen Luftabschluss zu bilden, sodass die Strömungsverläufe für die einströmende und die ausströmende Luft zuverlässig getrennt werden.

Während eines Normalbetriebes (d.h. zum Trocknen der Luft) strömt die Luft zunächst über den Einlass 112 in das Innere des Gehäuses 110 ein. Daran anschließend gelangt die Luft über die Einströmöffnungen 122 in die Luftverteilungsstruktur 160, wo es zu einer horizontalen Verteilung der einströmenden Luft kommt. Nach der Verteilung der einströmenden Luft entlang der horizontalen Fläche, durchströmt die Luft zunächst den ersten Partikelfilter 152 und daran anschließend den Koaleszenzfilter 151 (oder eine andere weitere Filtereinheit).

Daran anschließend gelangt die Luft entlang des Strömungsweges 105 zu dem Trockenmittel. Am oberen Ende des Trockenmittelbehälters 120 durchströmt die Luft den zweiten Partikelfilter 153 und verlässt den Trockenmittelbehälter 120 über die Ausströmöffnungen 124. Nach dem Passieren der Ausströmöffnungen 124 gelangt die Luft in den Hohlraum 170, der zwischen dem Gehäuse 110 und dem Abdeckelement 135 ausgebildet ist und die getrocknete Luft führt, um sie anschließend über den Seitenkanal 107 zwischen dem Gehäuse 110 und dem Trockenmittelbehälter 120 zu dem Auslass 114 hinunterzuleiten, wo die Luft die Trockenmittelpatrone 100 verlässt.

Zu einer Umkehrung der Strömungsrichtung kommt es beispielsweise während der Regeneration oder während des Ablassens. In Druckluftsystemen kann beispielsweise, wenn in dem Luftreservoir ausreichend Druckluft vorhanden ist, der Kompressor abgeschaltet werden und ein entsprechendes Ventil betätigt werden. Dies führt dazu, dass es zu einem Rückstrom kommt. Gemäß der vorliegenden Erfindung kann dieser Rückstrom dazu genutzt werden, das Trockenmittel teilweise zu regenerieren, da die trockene Luft (beispielsweise in dem Hohlraum 170) in das Trockenmittel gelangt und dieses regeneriert. Außerdem bezieht sich die Regeneration auf einen separaten Prozess, wo das Trockenmittel durch eine Umkehrung der Betriebsweise gezielt getrocknet wird.

Diese Prozesse werde durch Ausführungsbeispiele dadurch unterstützt, dass der Hohlraum 170 ein vorbestimmtes Volumen an getrockneter Luft enthält, welches schnell und auch bei geringem Rückstrom in das Trockenmittel gelangt und zu deren Regeneration führt.

Obwohl in der Darstellung der Fig. 2 die Strömungswege der einströmenden Luft und der ausströmenden Luft aus der Trockenmittelpatrone sich zu kreuzen scheinen, sind beide Pfade voneinander getrennt. Dafür ist innerhalb des Trockenmittelbehälters 120 zumindest ein radialer Verbindungskanal 210 ausgebildet, der den Auslass 114 mit dem Seitenkanal 107 verbindet. Anderseits sind die Einströmöffnungen 122 des Trockenmittelbehälters 120 zu dem zumindest einen Verbindungskanal 210 winkelmäßig versetzt, sodass beide Strömungswege voneinander getrennt sind, d.h. einen anderen Winkelbereich einnehmen (in einer horizontalen Querschnittsebene).

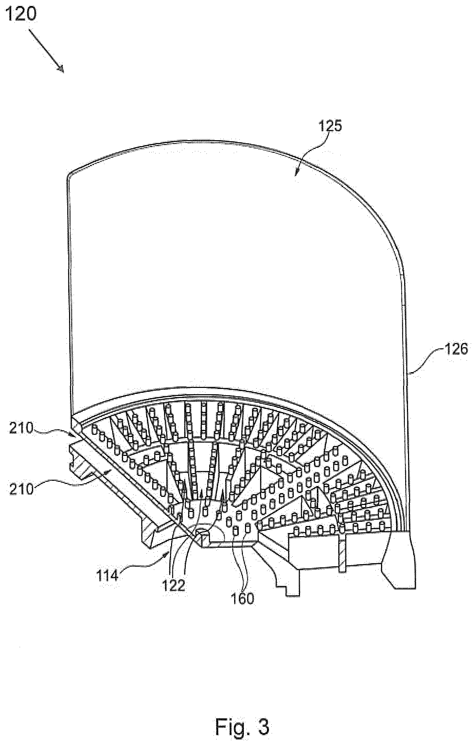

Fig. 3 zeigt ein Ausführungsbeispiel für den Trockenmittelbehälter 120, wobei der Trockenmittelbehälter 120 zylinderförmig ausgebildet ist und die Fig. 3 lediglich ein Winkelsegment des Druckmittelbehälters 120 zeigt.

Der Trockenmittelbehälter 120 umfasst eine Seitenwand 126, die den Innenraum 125 umgibt und zwei Stirnflächen des zylinderförmigen Druckmittelbehälters miteinander verbindet, wobei in der Fig. 3 nur die untere Stirnfläche in dem Winkelabschnitt gezeigt ist. Entlang der unteren Stirnfläche sind drei Einströmöffnungen 122 ausgebildet, von wo die einströmende Luft in den Innenraum 125 gelangt. Außerdem sind entlang der unteren Stirnfläche eine Vielzahl von Vorsprüngen 160 ausgebildet, die die Luftverteilungsstruktur bilden, die die einströmende Luft über den so definierten Zwischenraum lateral verteilt, bevor die Luft beispielsweise nach Passieren eines Partikelfilter oder eines anderen Begrenzungssegments in den Innenraum 125 strömt. Daher kann die über die Einströmöffnungen 122 einströmende Luft sich in dem Zwischenraum radial über die gesamte horizontale Fläche ausbreiten und ermöglicht somit eine gleichmäßige Durchströmung des Innenraums 125 des Trockenmittelbehälters 120.

Wie in der Fig. 2 beschrieben, ist zwischen der Seitenwand 126 des Trockenmittelbehälters 120 und dem Gehäuse 110 ein Seitenkanal ausgebildet, der über ein oder mehrere Verbindungskanäle 210 mit dem Auslass 114 verbunden ist. Die Fig. 3 zeigt einen dieser Verbindungskanäle 210 in einer Längsschnittansicht. Dieser Verbindungskanal 210 ist von den Einströmöffnungen 122 und dem inneren Raum 125 (fluid) getrennt, sodass die ausströmende Luft nicht in den Innenraum 125 des Trockenmittelbehälters zurück gelangen kann.

Im Vergleich zu einem konventionellen Trockenmittelbehälter ist somit der Auslass 114 entlang der unteren Stirnfläche geschlossen, währenddessen die Einlassöffnungen 122 an der unteren Stirnfläche ausgebildet sind, um einen Luftstrom in den Innenraum 125 von unten zu ermöglichen (d.h. von der gleichen Seite wie der Auslass 114). Außerdem unterscheidet sich der Erfindungsgegenstand von den konventionellen Trockenmittelbehälter durch den zumindest einen Seitenkanal 210, der eine radiale Verbindung von der Seitenwand 126 zu dem Auslass 114 bereitstellt.

Die Trockenmittelpatrone kann beispielsweise für eine Luftaufbereitung, z.B. in Nutzfahrzeugen oder Bremssystemen, verwendet werden. Daher beziehen sich weitere Ausführungsbeispiele ebenso auf ein Fahrzeug, insbesondere auf ein Nutzfahrzeug, mit einem Bremssystem und einer der zuvor beschriebenen Trockenmittelpatrone, die zur Luftaufbereitung für das Bremssystem geeignet ist.

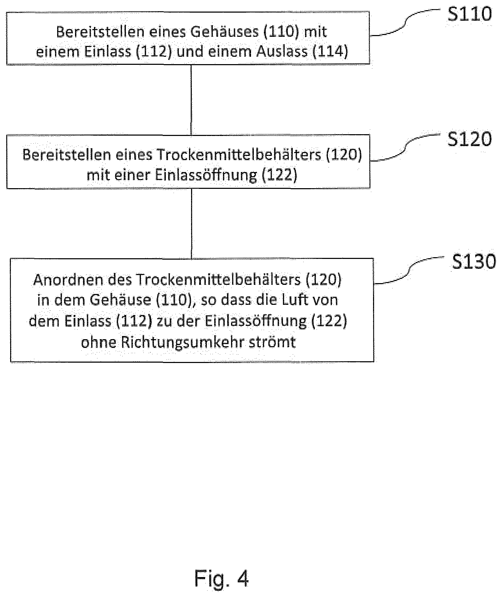

Fig. 4 zeigt ein Flussdiagramm für ein Verfahren zur Herstellung einer Trockenmittelpatrone 100 zum Trocknen von Luft entlang eines Strömungsweges 105. Das Verfahren umfasst ein Bereitstellen S110 eines Gehäuses 110 mit einem Einlass 112 und einem Auslass 114, die durch den Strömungsweg (105) verbunden sind. Außerdem umfasst das Verfahren ein Bereitstellen S120 eines Trockenmittelbehälters 120 mit einem Innenraum 125 für Trockenmittel, zumindest einer Einströmöffnung 122 und zumindest einer Ausströmöffnung 124, die durch den Strömungsweg 105 verbunden sind. Schließlich umfasst das Verfahren ein Anordnen S130 des Trockenmittelbehälters 120 in dem Gehäuse 110, sodass das Gehäuse 110 und der Trockenmittelbehälter 120 den Strömungsweg 105 für Luft derart bilden, dass die Luft während des Trocknens der Luft von dem Einlass 112 zu der zumindest einen Einströmöffnung 122 ohne Richtungsumkehr strömt.

Die genannte Reihenfolge der Schritte impliziert keine zeitliche Abfolge oder nur insoweit, wie es zwingend erforderlich ist.

Ausführungsbeispiele der vorliegenden Erfindung bieten die folgenden Vorteile.

Da der Einlass 112 und die Einströmöffnungen 122 auf der gleichen Seite angeordnet sind, bieten Ausführungsbeispiele einen kürzeren Weg für die Feuchtigkeit als auch für Öl, Kohlepartikel oder andere Verschmutzungen zum Ablassventil. Beim Ablassen brauchen somit nicht die Verschmutzungen zunächst den gesamten Weg durch die Trockenmittelpatrone 100 nehmen, sondern werden direkt über die Einströmöffnungen 122 und den Einlass 112 abgeleitet.

Ein weiterer Vorteil besteht darin, dass die Schwerkraft dafür sorgt, dass eine zusätzliche bzw. bessere Regeneration des Filters 150 und des Trockenmittels ermöglicht wird. Dies ist insbesondere dann vorteilhaft, wenn die Trockenmittelpatrone 100 in einer vertikal aufrechten Position befestigt wird (d.h. wenn der Einlass 112 und die Einströmöffnung 122 vertikal unterhalb des Trockenmittels angeordnet sind).

Ein weiterer Vorteil von Ausführungsbeispielen besteht darin, dass die Abstandspins (Luftverteilungsstruktur 160) einen Totraum (der nicht von Luft durchströmt wird) verhindern und dass ein größeres Volumen nach dem Trockenmittel (oberhalb des Granulatdeckels oder Gehäusedeckels 111) bereitgestellt wird. Somit kommt es zu einer besseren Durchströmung des Trockenmittels.

Weiterhin sorgt das größere trockene Luftvolumen (in dem Hohlraum 170) für eine verbesserte Regeneration während des Ablassvorganges, da dieses trockene Luftvolumen dazu genutzt wird, dass bei umgekehrter Strömungsrichtung die trockene Luft in das Trockenmittel gelangt und dieses damit regeneriert werden kann.

Ein weiterer Vorteil von Ausführungsbeispielen besteht darin, dass die erfindungsgemäße Trockenmittelpatrone 100 eine geringere Neigung zum Zusetzen am Trockenmittelausgang (am Granulatdeckel oder an den Ausströmöffnungen 124) hat, da Ausführungsbeispiele eine größere durchströmte Fläche aufweisen als konventionelle Trockenmittelpatronen und da der Trockenmittelausgang vertikal oben liegt. Da gemäß Ausführungsbeispielen der Luftauslass (Ausströmöffnungen 124) sich außerdem über die gesamte horizontale Fläche an der oberen Stirnfläche befindet, bieten Ausführungsbeispiele einen größeren Querschnitt am Luftauslass.

Ein weiterer Vorteil von Ausführungsbeispielen besteht darin, dass aufgrund der vertikalen Anordnung durch ein Rütteln kleine Kugeln (Trockenmittel) nach unten in der Nähe der Einströmöffnungen 122 fallen und somit zuerst umströmt werden. Dies bietet eine Verbesserung der Trocknung der Luft am Lufteintritt 122.

Schließlich werden die Metallteile nach dem Trockenmittel besser vor Korrosion geschützt, da gemäß Ausführungsbeispielen die Metallteile (wie beispielsweise das Abdeckelement 135 oder auch die Feder 140 oder auch der Gehäusedeckel 111) nur mit getrockneter Luft in Verbindung gelangen und nicht wie bei konventionellen Trockenmittelpatronen, wo die feuchte Luft zunächst dorthin geleitet wird.

Ausführungsbeispiele können einen Deckel einer Standardkartusche nutzen und umfassen einen optionalen axialen Koaleszenzfilter. Der Trockenmittelbehälter 120 kann als ein neues Spritzgussteil gefertigt werden, nutzt nur eine minimierte Auflagefläche und erlaubt eine verbesserte Anströmung der ersten Filterlage durch die Pins. Ausführungsbeispiele erlauben viel Spielraum hinsichtlich der fertigbaren Geometrien. Vorteilhafterweise kann Öl ausgeblasen werden.

### Liste der Bezugszeichen

- 100: Trockenmittelpatrone
- 105: Strömungsweg
- 107: Seitenkanal
- 110: Gehäuse
- 111: Gehäusedeckel
- 112: Einlass
- 114: Auslass
- 120: Trockenmittelbehälter
- 122: zumindest eine Einströmöffnung
- 124: zumindest eine Ausströmöffnung
- 125: Innenraum
- 126: Seitenwand
- 135: Abdeckelement
- 140: Feder
- 150: Filtereinrichtung
- 151: Koaleszenzfilter
- 152,153: erster und zweiter Partikelfilter
- 160: Luftverteilungsstruktur
- 170: Hohlraum
- 180: zumindest ein Dichtelement
- 190: Unterbau
- 210: zumindest ein Verbindungskanal

## Patentansprüche

1. Trockenmittelpatrone (100) zum Trocknen von Luft entlang eines Strömungsweges (105), mit folgenden Merkmalen:
ein Gehäuse (110) mit einem Einlass (112) und einem Auslass (114), die durch den Strömungsweg (105) verbunden sind; und
ein Trockenmittelbehälter (120) mit einem Innenraum (125) für Trockenmittel, zumindest einer Einströmöffnung (122) und zumindest einer Ausströmöffnung (124), die durch den Strömungsweg (105) miteinander verbunden sind, wobei in einer Querschnittsfläche senkrecht zum Strömungsweg (105) in dem Innenraum (125) der Auslass (114) in einem zentralen Bereich angeordnet ist und der Einlass (112) in einem peripheren Bereich, der den zentralen Bereich umgibt, angeordnet ist,
wobei der Trockenmittelbehälter (120) sich in dem Gehäuse (110) befindet,
**dadurch gekennzeichnet, dass**
der Trockenmittelbehälter (120) und das Gehäuse (110) derart ausgebildet sind, dass die Luft während des Trocknens der Luft entlang des Strömungsweges (105) von dem Einlass (112) zu der zumindest einen Einströmöffnung (122) strömt und nach einem Verlassen des Trockenmittelbehälters (120) und einer anschließenden Strömungsumkehr entlang eines Seitenkanals (107) zwischen dem Trockenmittelbehälter (120) und dem Gehäuse (110) zu dem Auslass (114) strömt.

2. Trockenmittelpatrone (100) nach Anspruch 1, wobei der Trockenmittelbehälter (120) eine Zylinderform mit einer Seitenwand (126), die den Innenraum (125) umgibt und sich zwischen zwei Stirnflächen erstreckt, aufweist und die zumindest eine Einströmöffnung (122) und die zumindest eine Ausströmöffnung (124) axial gegenüberliegend an den Stirnflächen ausgebildet sind, und wobei zwischen der Seitenwand (126) und dem Gehäuse (110) der Seitenkanal (107) gebildet ist, sodass der Strömungsweg (105) sich von dem Einlass (112), durch die zumindest eine Einströmöffnung (122), den Innenraum (125), die zumindest eine Ausströmöffnung (124), den Seitenkanal (107) und den Auslass (114) des Gehäuses (110) erstreckt.

3. Trockenmittelpatrone (100) nach Anspruch 1 oder Anspruch 2, die ausgebildet ist, um an einem Fahrzeug derart befestigt zu werden, dass der Strömungsweg (105) von der zumindest einen Einströmöffnung (122) zu der zumindest einen Ausströmöffnung (124) entgegen der Schwerkraft erfolgt.

4. Trockenmittelpatrone (100) nach einem der vorhergehenden Ansprüche, wobei der Trockenmittelbehälter (120) eine Luftverteilungsstruktur (160) an der zumindest einen Einströmöffnung (122) aufweist, wobei die Luftverteilungsstruktur (160) ausgebildet ist, um die Luft, bevor sie in den Innenraum (125) gelangt, lateral über eine Breitenausdehnung des Trockenmittelbehälters (120) zu verteilen.

5. Trockenmittelpatrone (100) nach Anspruch 4, wobei die Luftverteilungsstruktur (160) aus einem System von Vorsprüngen besteht, die einen Zwischenraum definieren, der ausgebildet ist, um die Luft von der zumindest einen Einströmöffnung (122) über eine Breite des Trockenmittelbehälters (120) senkrecht zu dem Strömungsweg (105) in dem Innenraum (125) zu verteilen.

6. Trockenmittelpatrone (100) nach einem der vorhergehenden Ansprüche 2 bis 5, wobei stromabwärts von der zumindest einen Ausströmöffnung (124) ein Hohlraum (170) in dem Gehäuse (110) gebildet ist und der Hohlraum (170) die zumindest eine Ausströmöffnung (124) mit dem Seitenkanal (107) verbindet und ein vorbestimmtes Mindestvolumen aufweist, um eine Regeneration bei umgekehrter Strömungsrichtung zu erleichtern.

7. Trockenmittelpatrone (100) nach Anspruch 6, wobei der Trockenmittelbehälter (120) an einer der Stirnflächen ein Abdeckelement (135) aufweist und die zumindest eine Ausströmöffnung (124) mehrere Ausströmöffnungen (124) umfasst, die in dem Abdeckelement (135) ausgebildet sind, wobei die mehreren Ausströmöffnungen (124) in einer Querschnittsfläche senkrecht zum Strömungsweg (105) in dem Innenraum (125) verteilt sind, um eine gleichmäßige Durchströmung des Innenraums (125) zu erreichen.

8. Trockenmittelpatrone (100) nach Anspruch 7, die weiter eine Feder (140) zwischen dem Abdeckelement (135) und dem Gehäuse (110) aufweist, wobei die Feder (140) ausgebildet ist, um einen Druck auf das Abdeckelement (135) auszuüben, sodass ein in dem Innenraum (125) befindliches Trockenmittel unter Vorspannung steht.

9. Trockenmittelpatrone (100) nach einem der vorhergehenden Ansprüche, die weiter zumindest ein Dichtelement (180) umfasst und das Gehäuse (110) einen Unterbau (190) umfasst, wobei das zumindest eine Dichtelement (180) einen Kontakt zwischen dem Trockenmittelbehälter (120) und dem Gehäuse (110) abdichtet.

10. Trockenmittelpatrone (100) nach einem der vorhergehenden Ansprüche, wobei, in einer Querschnittsfläche senkrecht zum Strömungsweg (105) in dem Innenraum (120), die zumindest eine Einströmöffnung (122) mehrere Einströmöffnungen umfasst, die nur an vorbestimmten Winkelabschnitten gebildet sind, und zwischen den vorbestimmten Winkelabschnitten zumindest ein radialer Verbindungskanal (210) ausgebildet ist, der den Auslass (114) des Gehäuses (110) mit dem Seitenkanal (107) verbindet.

11. Trockenmittelpatrone (100) nach einem der vorhergehenden Ansprüche, die weiter ein Trockenmittel und eine Filtereinrichtung (150) umfasst, wobei das Trockenmittel sich in dem Innenraum (125) befindet und die Filtereinrichtung (150) zwischen dem Trockenmittel und der zumindest einen Einströmöffnung (122) des Trockenmittelbehälters (120) oder zwischen dem Trockenmittel und der zumindest einen Ausströmöffnung (124) des Trockenmittelbehälters (120) angeordnet ist, wobei die Filtereinrichtung (150) ausgebildet ist, um Verschmutzungen aus der Luft zu filtern.

12. Trockenmittelpatrone (100) nach Anspruch 11, wobei die Filtereinrichtung (150) zumindest einen Koaleszenzfilter (151) und/oder einen oder mehrere Partikelfilter (152, 153) umfasst.

13. Trockenmittelpatrone (100) nach einem der vorhergehenden Ansprüche, wobei der Trockenmittelbehälter (120) zumindest einen radialer Verbindungskanal (210) umfasst,
wobei, in einer Querschnittsfläche senkrecht zum Strömungsweg (105) in dem Innenraum (120), die Einströmöffnungen (122) nur an vorbestimmten Winkelabschnitten gebildet sind, und zwischen den vorbestimmten Winkelabschnitten der zumindest eine radiale Verbindungskanal (210) ausgebildet ist.

14. Fahrzeug, insbesondere ein Nutzfahrzeug, mit einem Bremssystem und einer Trockenmittelpatrone (100) nach einem der Ansprüche 1 bis 12 zur Luftaufbereitung für das Bremssystem.

15. Verfahren zum Herstellen einer Trockenmittelpatrone (100) zum Trocknen von Luft entlang eines Strömungsweges (105), mit folgenden Schritten:
Bereitstellen (S110) eines Gehäuses (110) mit einem Einlass (112) und einem Auslass (114), die durch den Strömungsweg (105) verbunden sind; und
Bereitstellen (S120) eines Trockenmittelbehälters (120) mit einem Innenraum (125) für Trockenmittel, zumindest einer Einströmöffnung (122) und zumindest einer Ausströmöffnung (124), die durch den Strömungsweg (105) verbunden sind, wobei in einer Querschnittsfläche senkrecht zum Strömungsweg (105) in dem Innenraum (125) der Auslass (114) in einem zentralen Bereich angeordnet ist und der Einlass (112) in einem peripheren Bereich, der den zentralen Bereich umgibt, angeordnet ist;
**gekennzeichnet durch** den folgenden Schritt: Andordnen (S130) des Trockenmittelbehälters (120) in dem Gehäuse (110), sodass das Gehäuse (110) und der Trockenmittelbehälter (120) den Strömungsweg (105) für Luft derart bilden, dass die Luft während des Trocknens der Luft von dem Einlass (112) zu der zumindest einen Einströmöffnung (122) strömt und nach einem Verlassen des Trockenmittelbehälters (120) und einer anschließenden Strömungsumkehr entlang eines Seitenkanals (107) zwischen dem Trockenmittelbehälter (120) und dem Gehäuse (110) zu dem Auslass (114) strömt.

## Claims

1. Desiccant cartridge (100) for drying air along a flow path (105), with the following characteristics:
a housing (110) with an inlet (112) and an outlet (114), which are connected by the flow path (105); and
a desiccant container (120) with an inside space (125) for desiccant, at least one inflow opening (122) and at least one outflow opening (124), which are connected with one another by the flow path (105), such that in a cross-sectional area perpendicular to the flow path (105) in the inside space (125), the outlet (114) is arranged in a central area and the inlet (112) is arranged in a peripheral area which surrounds the central area.,
wherein the desiccant container (120) is accommodated in the housing (110),
**characterised in that**
the desiccant container (120) and the housing (110) are designed such that during the drying of the air along its flow path (105), the air flows from the inlet (112) to the at least one inflow opening (122) and after emerging from the desiccant container (120) and undergoing a subsequent flow reversal, it flows along a side duct (107) between the desiccant container (120) and the housing (110) to the outlet (114).

2. Desiccant cartridge (100) according to Claim 1, wherein the desiccant container (120) is cylindrical with a sidewall (126) that surrounds the inside space (125) and extends between two end faces, and the at least one inflow opening (122) and the at least one outflow opening (124) are formed axially opposite one another on the said end faces, and wherein the side duct (107) is formed between the sidewall (126) and the housing (110), so that the flow path (105) extends from the inlet (112), through the at least one inflow opening (122), through the inside space (125), through the at least one outflow opening (124), through the side duct (107) and through the outlet (114) of the housing (110).

3. Desiccant cartridge (100) according to Claims 1 or 2, which is designed to be attached onto a vehicle in such manner that the flow path (105) extends from the at least one inflow opening (122) to the at least one outflow opening (124) in opposition to gravity.

4. Desiccant cartridge (100) according to any of the preceding claims, wherein the desiccant container (120) has an air distribution structure (160) at the at least one inflow opening (122), such that the air distribution structure (160) is designed to distribute the air laterally over the full width of the desiccant container (120) before it gets into the inside space (125).

5. Desiccant cartridge (100) according to Claim 4, wherein the air distribution structure (160) consists of a system of projections which define an intermediate space designed to distribute the air from the at least one inflow opening (122) over the width of the desiccant container (120) perpendicularly to the flow path (105) into the inside space (125).

6. Desiccant cartridge (100) according to any of the preceding claims 2 to 5, wherein downstream from the at least one outflow opening (124) a hollow space (170) is formed in the housing (110) and the said hollow space (170) connects the at least one outflow opening (124) to the side duct (107), the hollow space having a specified minimum volume in order to facilitate regeneration when the flow direction is reversed.

7. Desiccant cartridge (100) according to Claim 6, wherein the desiccant container (120) has a covering element (135) on one of the end faces, and the at least one outflow opening (124) comprises a plurality of outflow openings (124) formed in the covering element (135), such that the plurality of outflow openings (124) are distributed over a cross-section perpendicular to the flow path (105) in the inside space (125), in order to achieve uniform through-flow through the inside space (125).

8. Desiccant cartridge (100) according to Claim 7, which also has a spring (140) between the covering element (135) and the housing (110), such that the spring (140) is designed to exert a pressure on the covering element (135) so that a desiccant present in the inside space (125) is under prestress.

9. Desiccant cartridge (100) according to any of the preceding claims, which in addition comprises at least one sealing element (180) and the housing (110) has a substructure (190), such that the at least one sealing element (180) seals a contact between the desiccant container (120) and the housing (110).

10. Desiccant cartridge (100) according to any of the preceding claims, wherein in a cross-sectional area perpendicular to the flow path (105) in the inside space (125) the at least one inflow opening (122) has a plurality of inflow openings which are formed only in predetermined angle segments, and between the said predetermined angle segments at least one radial connecting duct (210) is formed, which connects the outlet (114) of the housing (110) to the side duct (107).

11. Desiccant cartridge (100) according to any of the preceding claims, which in addition contains a desiccant and a filter device (150), wherein the desiccant is in the inside space (125) and the filter device (150) is arranged between the desiccant and the at least one inflow opening (122) of the desiccant container (120) or between the desiccant and the at least one outflow opening (124) of the desiccant container (120), the filter device (150) being designed to filter contaminants out of the air.

12. Desiccant cartridge (100) according to Claim 11, such that the filter device (150) comprises at least one coalescence filter and/or a plurality of particle filters (152, 153).

13. Desiccant cartridge (100) according to any of the preceding claims, wherein the desiccant container (120) has at least one redial connecting duct (210), wherein in a cross-sectional area perpendicular to the flow path (105) in the inside space (125), the inflow openings (122) are only formed in predetermined angle segments, and between the predetermined angle segments the at least one radial connecting duct (210) is formed.

14. Vehicle, in particular a utility vehicle, with a brake system and a desiccant cartridge (100) according to any of Claims 1 to 12, for the treatment of air for the brake system.

15. Method for producing a desiccant cartridge (100) for drying air along a flow path (105), the said method having the following steps:
production (S110) of a housing (110) with an inlet (112) and an outlet (114), which are connected by a flow path (105); and
production (S120) of a desiccant container (120) with an inside space (125) for desiccant, having at least one inflow opening (122) and at least one outflow opening (124) which are connected by the flow path (105), wherein in a cross-sectional area perpendicular to the flow path (105) in the inside space (125) the outlet (114) is arranged in a central area and the inlet (112) is arranged in a peripheral area that surrounds the central area;
**characterised by** the following step:
arrangement (S130) of the desiccant container (120) in the housing (110) so that the housing (110) and the desiccant container (120) form the flow path (105) in such manner that during the drying of the air, the air flows from the inlet (112) to the at least one inflow opening (122) and after emerging from the desiccant container (120) and undergoing a subsequent flow reversal, it flows along a side duct (107) between the desiccant container (120) and the housing (110) to the outlet (114).

## Revendications

1. Cartouche (100) d'agent dessiccateur pour sécher de l'air le long d'un trajet (105) d'écoulement, comprenant les caractéristiques suivantes :
un boîtier (100) ayant une entrée (112) et une sortie (114), qui communique par un trajet (105) d'écoulement ; et un récipient (120) d'agent dessiccateur ayant un espace (125) intérieur pour l'agent dessiccateur, au moins une ouverture (122) d'entrée et au moins une ouverture (124) de sortie, qui communiquent entre elles par un trajet (105) d'écoulement, dans laquelle, dans une surface de section transversale perpendiculaire au trajet (105) d'écoulement dans l'espace (125) intérieur, la sortie (114) est disposée dans une partie centrale et l'entrée (112) dans une partie périphérique, qui entoure la partie centrale,
dans laquelle le récipient (120) d'agent dessiccateur se trouve dans le boîtier (110),
**caractérisée en ce que**
le récipient (120) d'agent dessiccateur et le boîtier (110) sont constitués de manière à ce que l'air passe, pendant le séchage de l'air, le long du trajet (105) d'écoulement de l'entrée (112) à la au moins une ouverture (122) d'entrée et, après avoir quitté le récipient (120) d'agent dessiccateur et une inversion de l'écoulement ensuite, s'écoule le long d'un canal (107) latéral entre le récipient (120) d'agent dessiccateur et le boîtier (110) vers la sortie (114).

2. Cartouche (100) d'agent dessiccateur suivant la revendication 1, dans laquelle le récipient (120) d'agent dessiccateur a une forme cylindrique ayant une paroi (126) latérale, qui entoure l'espace (125) intérieur et s'étend entre deux surfaces frontales et la au moins une ouverture (122) d'entrée et la au moins une ouverture (124) de sortie sont constituées en étant opposées axialement sur les surfaces frontales et dans laquelle le canal (107) latéral est formé entre la paroi (126) latérale et le boîtier (110), de manière à ce que le trajet (105) d'écoulement s'étende à partir de l'entrée (112), en passant par la au moins une ouverture (122) d'entrée, l'espace (125) intérieur, la au moins une ouverture (124) de sortie, le canal (107) latéral et la sortie (114) du boîtier (110).

3. Cartouche (100) d'agent dessiccateur suivant la revendication 1 ou la revendication 2, qui est constituée pour être fixée à un véhicule, de manière à ce que le trajet (105) d'écoulement s'effectue de la au moins une ouverture (122) d'entrée à la au moins une ouverture (124) de sortie à l'encontre de la force de gravité.

4. Cartouche (100) d'agent dessiccateur suivant l'une des revendications précédentes, dans laquelle le récipient (120) d'agent dessiccateur a une structure (160) de répartition de l'air sur la au moins une ouverture (122) d'entrée, la structure (160) de répartition de l'air étant constituée pour répartir l'air, avant qu'il parvienne à l'espace (125) intérieur, latéralement sur une étendue en largeur du récipient (120) d'agent dessiccateur.

5. Cartouche (100) d'agent dessiccateur suivant la revendication 4, dans laquelle la structure (160) de répartition de l'air est constituée d'un système de saillies, qui définissent un espace intermédiaire constitué pour répartir l'air depuis la au moins une ouverture (122) d'écoulement sur une largeur du récipient (120) d'agent dessiccateur perpendiculairement au trajet (105) d'écoulement dans l'espace (125) intérieur.

6. Cartouche (100) d'agent dessiccateur suivant l'une des revendications 2 à 5 précédentes, dans laquelle un creux (170) est formé dans le boîtier (110) en aval de la au moins une ouverture (124) de sortie et le creux (170) met la au moins une ouverture (124) de sortie en communication avec le canal (107) latéral et a un volume minimum déterminé à l'avance, afin de faciliter une régénération lors de l'inversion du sens d'écoulement.

7. Cartouche (100) d'agent dessiccateur suivant la revendication 6, dans laquelle le récipient (120) d'agent dessiccateur a un élément (135) de recouvrement sur l'une des surfaces frontales et la au moins une ouverture (124) de sortie comprend plusieurs ouvertures (124) de sortie constituées dans l'élément (135) de recouvrement, les plusieurs ouvertures (124) de sortie étant réparties dans une surface de section transversale perpendiculairement au trajet (105) d'écoulement dans l'espace (125) intérieur, afin d'obtenir une traversée uniforme de l'espace (125) intérieur.

8. Cartouche (100) d'agent dessiccateur suivant la revendication 7, qui a, en outre, un ressort (140) entre l'élément (135) de recouvrement et le boîtier (110), le ressort (140) étant constitué pour appliquer une pression à l'élément (135) de recouvrement, de manière à précontraindre un agent dessiccateur se trouvant dans l'espace (125) intérieur.

9. Cartouche (100) d'agent dessiccateur suivant l'une des revendications précédentes, qui comprend, en outre, au moins un élément (180) d'étanchéité et le boîtier (110) comprend une sous-structure (190), le au moins un élément (180) d'étanchéité rendant étanche un contact entre le récipient (120) d'agent dessiccateur et le boîtier (110).

10. Cartouche (100) d'agent dessiccateur suivant l'une des revendications précédentes, dans laquelle, dans une surface de section transversale perpendiculaire au trajet (105) d'écoulement, la au moins une ouverture (122) d'entrée comprend plusieurs ouvertures d'entrée, qui ne sont formées que sur des parties angulaires déterminées à l'avance et entre les parties angulaires déterminées à l'avance est constitué au moins un canal (210) de liaison, qui met la sortie (114) du boîtier (110) en communication avec le canal (107) latéral.

11. Cartouche (100) d'agent dessiccateur suivant l'une des revendications précédentes, qui comprend, en outre, un agent dessiccateur et un dispositif (15) de filtration, l'agent dessiccateur se trouvant dans l'espace (125) intérieur et le dispositif (150) de filtration étant disposé entre l'agent dessiccateur et la au moins une ouverture (122) d'entrée du récipient (120) d'agent dessiccateur ou entre l'agent dessiccateur et la au moins une ouverture (124) de sortie du récipient (120) d'agent dessiccateur, le dispositif (150) de filtration étant constitué pour filtrer des pollutions de l'air.

12. Cartouche (100) d'agent dessiccateur suivant la revendication 11, dans laquelle le dispositif (150) de filtration comprend au moins un filtre (151) de coalescence et/ou un ou plusieurs filtres (152, 153) de particules.

13. Cartouche (100) d'agent dessiccateur suivant l'une des revendications précédentes, dans laquelle le récipient (120) d'agent dessiccateur comprend au moins un canal (210) de liaison radial,
dans laquelle, dans une surface de section transversale perpendiculaire au trajet (105) d'écoulement dans l'espace (120) intérieur, les ouvertures (122) d'entrée sont formées sur des parties angulaires déterminées à l'avance et le au moins un canal (210) de liaison radial est constitué entre les parties angulaires déterminées à l'avance.

14. Véhicule, notamment véhicule utilitaire, comprenant un système de frein et une cartouche (100) d'agent dessiccateur suivant l'une des revendications 1 à 12 pour le traitement de l'air du système de frein.

15. Procédé de fabrication d'une cartouche (100) d'agent dessiccateur pour sécher de l'air suivant un trajet (105) d'écoulement, comprenant les stades suivants :
on se procure (S110) un boîtier (110) ayant une entrée (112) et une sortie (114), qui sont en communication par le trajet (105) d'écoulement ; et
on se procure (S120) un récipient (120) d'agent dessiccateur ayant un espace (125) intérieur pour de l'agent dessiccateur, au moins une ouverture (122) d'entrée et au moins une ouverture (124) de sortie, qui sont en communication par le trajet (105) d'écoulement, dans lequel, dans une surface de section transversale perpendiculaire au trajet (105) d'écoulement dans l'espace (125) intérieur, la sortie (114) est disposée dans une partie centrale et l'entrée (112) dans une partie périphérique, qui entoure la partie centrale,
**caractérisé par** le stade suivant :
on met (S130) le récipient (120) d'agent dessiccateur dans le boîtier (110), de manière à ce que le boîtier (110) et le récipient (120) d'agent dessiccateur forment le trajet (105) d'écoulement de l'air, de façon à ce que l'air s'écoule pendant le séchage de l'air de l'entrée (112) à la au moins une ouverture (122) d'entrée et, après avoir quitté le récipient (120) d'agent dessiccateur et une inversion, qui s'ensuit, de l'écoulement, le long d'un canal (107) latéral entre le récipient (120) d'agent dessiccateur et le boîtier (110) pour aller à la sortie (114) .
